# EUROPEAN PATENT APPLICATION

(11) **EP 0 905 404 A1**
(43) Date of publication of application: **31.03.1999**
(21) Application number: 98307197.8
(22) Date of filing: 07.09.1998
(51) Int. Cl.: F16D 65/853

(54) **Brake caliper with cooling installation**

(30) Priority: 25.09.1997 GB 9720320
(71) Applicant: Alcon Components Limited, Tamworth, Staffs B79 7TN (GB)
(72) Inventor: Smith, Philip John, Sutton Coldfield , West Midlands B75 6DY (GB)
(74) Representative: Barnfather, Karl Jon, Dr.

(57) **Abstract**

A brake caliper for a vehicle comprising a body having a pair of limbs each having one or more pistons for moving a brake pad, and a cooling system for cooling both limbs of the brake caliper which cooling system comprises an independent passageway for the flow of a coolant through each limb.

## Description

The invention relates to a brake caliper for effecting braking of a motorised vehicle.

It is known to provide a brake caliper comprising a body having a pair of limbs which straddle a braking disc associated with one of the wheels of a vehicle. The or both limbs are known to comprise one or more pistons which are hydraulically actuated to apply a braking pad or pads to the braking disc thereby to slow the rotation of the disc due to friction.

The effect of friction during braking is to create a large amount of heat some of which is conducted through the brake caliper body and can affect the performance of the brake. For example, the brakes may be said to become "soggy" at high temperatures. It is known to cool brake calipers in order to minimise the effects of heating. However, it is not always possible to provide sufficient cooling for high performance vehicles, such as racing cars.

Accordingly, the invention seeks to provide a brake caliper with an improved cooling system. According to one aspect of the invention there is provided a brake caliper for a vehicle comprising a body having a pair of limbs each having one or more pistons for moving a brake pad, and a cooling system for cooling both limbs of the brake caliper which system comprises an independent passageway for the flow of a coolant through each limb.

Beneficially, coolant such as water or other suitable liquid passes from a heat exchanger, such as an air cooled radiator, and independently through each of the limbs of the brake caliper before passing back to the heat exchanger. Accordingly, equal heat dissipation can be effected in both limbs of the brake caliper since the coolant passing through each limb enters each limb at substantially the same temperature and then passes through the limbs at substantially the same flow rate.

In one form of the invention a common inlet passageway is provided in the body of the brake caliper which inlet passageway supplies both the independent limb passageways. Also, a common outlet passageway can be provided in the brake caliper body which is fed from both the independent limb passageways.

In a form of the invention the independent limb passageways comprise a channel which can comprise a channel-form or substantially U-shaped passageway, in the bottom of a limb and which channel is sealed, for example by a plate attached to the limb, thereby to form a coolant passageway. Beneficially therefore the channel can be cast or machined into the bottom of the limb and then sealed by a plate attached for example using screws. The passageway could be a cast, drilled or milled hole.

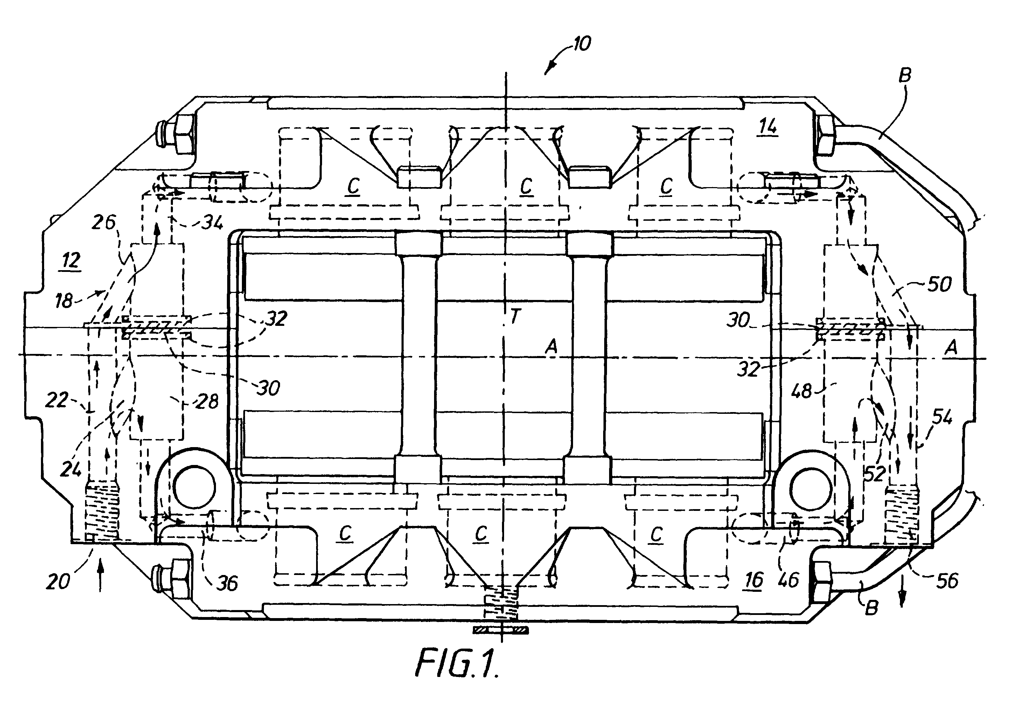

An embodiment of the invention will now be described, by way of example only, with reference to the accompanying drawings in which:-
FIGURE 1 is a schematic plan view of a brake caliper according to the invention; and

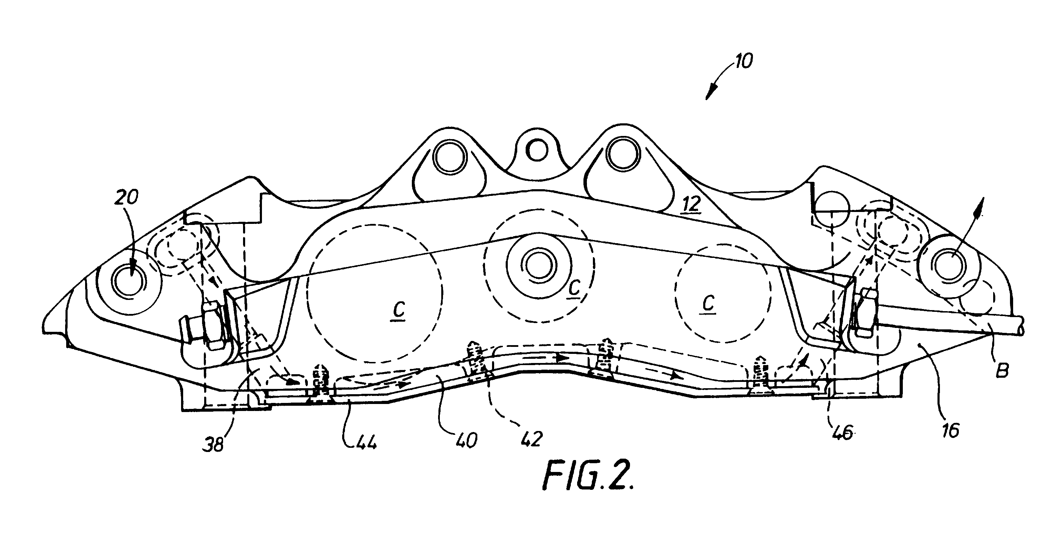

FIGURE 2 is a schematic side elevation view of the brake caliper shown in Figure 1.

The drawings show a brake caliper 10 according to the invention which comprises a body 12 having a first limb 14 and second limb 16. The limbs 14 and 16 house cylinders C which through the use of a hydraulic braking system B enable the application of braking pads against a braking disc (not shown) which passes between each of limbs 14 and 16 along longitudinal axis A.

Brake caliper 10 further comprises a cooling passageway 18 consisting of an inlet aperture 20, which can comprise internal threading for receiving an inlet pipe from a radiator or other heat exchanger. Inlet aperture 20 leads to an inlet passageway 22 which divides into a first and second section 24 and 26 respectively which channel coolant into a common chamber 28. Chamber 28 comprises a barrier 30 for separating the flow of coolant from each of sections 24 and 26. Barrier 30 can comprise a plate positioned in a recess and sealed using O rings 32 for example.

Coolant therefore flows independently from chamber 28 through independent passageways 34 and 36 which pass through limbs 14 and 16 respectively. Each of the independent limb passageways 34 and 36 comprise a first section 38 which passes down from chamber 28 to a channel 40 in the bottom of the associated limbs.

Channel 40 can be machined into the bottom of a limb to provide a passageway across the limb. Channel 40 is interrupted by a number of bosses or lands which receive screws 42 which attach a plate 44 to the bottom of the associated limb. However, continuous flow of coolant around the bosses is enabled by channel 40.

The channel leads to a second section 46 which leads up from the channel to a second chamber 48 which is substantially a mirror image of chamber 28 about transverse axis T. Accordingly chamber 48 comprises a barrier 30 such as a metal plate positioned in a recess and sealed by O rings 32 to divide the chamber 48 between the outlet flow of coolant from limbs 14 and 16.

Coolant from limb 14 is accordingly directed into a first section 50 of outlet passageway 54 while coolant from limb 16 is directed through second section 52 to outlet passageway 54. Outlet passageway 54 further comprises a threaded aperture 56 for connection to a pipe which could lead to a heat exchanger such as an air cooled radiator.

Thus, the coolant passageway 18 through the brake caliper divides the coolant near the inlet to the body and prevents flow from one limb to the other therefore providing even cooling of each of the limbs. This even cooling is aided by the barriers 30 and equal cross-sectional areas of the independent passageways through each limb which enables equal flow rates therethrough.

## Claims

1. A brake caliper for a vehicle comprising a body having a pair of limbs each having one or more pistons for moving a brake pad, and a cooling system for cooling both limbs of the brake caliper which cooling system comprises an independent passageway for the flow of a coolant through each limb.

2. A brake caliper according to Claim 1 wherein a common inlet passageway is provided in the body of the brake caliper which inlet passageway supplies both the independent limb passageways.

3. A brake caliper according to claim 1 or 2 comprising a common outlet passageway in the brake caliper body which is fed from both the independent limb passageways.

4. A brake caliper according to claim 2 or 3 wherein the independent limb passageways comprise a channel which comprises a channel-form or substantially U-shaped passageway thereby to form a coolant passageway.

5. A brake caliper according to claim 4 wherein the channel is sealed by a plate attached to the limb.

6. A brake caliper according to claim 4 or 5 wherein the channel is cast or machined into the bottom of the limb and then sealed by a plate attached by means such as screws.

7. A brake caliper according to any preceding Claim wherein the operable flow rate of coolant through the independent passageways is substantially equal.

8. A brake caliper according to Claim 7 wherein the minimum cross-sectional area within each independent passageway is substantially equal.

9. A heat exchange system for a brake caliper having a pair of limbs wherein coolant such as water or other suitable liquid passes from a heat exchanger, such as an air cooled radiator, and independently through each of the limbs of the brake caliper before passing back to the heat exchanger.

10. A heat exchanger according to Claim 9 having a brake caliper according to any of claims 1 to 8.

11. A braking system for a vehicle comprising a heat exchange system according to claim 9 and two or more brake calipers.
